(19)

**Europäisches Patentamt**
**European Patent Office**
**Office européen des brevets**

(11)  **EP 4 288 912 B1**

(12)  **EUROPEAN PATENT SPECIFICATION**

(45) Date of publication and mention
of the grant of the patent:
**13.08.2025  Bulletin 2025/33**

(21) Application number: **22847277.5**

(22) Date of filing: **15.12.2022**

(51) International Patent Classification (IPC):
**G06N 3/047** (2023.01)     **G06N 3/088** (2023.01)
**G06N 3/094** (2023.01)     **G06N 3/0455** (2023.01)

(52) Cooperative Patent Classification (CPC):
**G06N 3/0455; G06N 3/047; G06N 3/094;**
G06N 3/088

(86) International application number:
**PCT/JP2022/047254**

(87) International publication number:
**WO 2023/176086 (21.09.2023 Gazette 2023/38)**

(54) **METHOD AND SYSTEM FOR TRAINING A NEURAL NETWORK FOR IMPROVING ADVERSARIAL ROBUSTNESS**

VERFAHREN UND SYSTEM ZUM TRAINIEREN EINES NEURONALEN NETZWERKS ZUR VERBESSERUNG DER GEGNERISCHEN ROBUSTHEIT

PROCÉDÉ ET SYSTÈME D'ENTRAÎNEMENT D'UN RÉSEAU NEURONAL POUR AMÉLIORER LA ROBUSTESSE CONTRADICTOIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.03.2022  US 202217655487**

(43) Date of publication of application:
**13.12.2023  Bulletin 2023/50**

(73) Proprietor: **Mitsubishi Electric Corporation**
**Tokyo 100-8310 (JP)**

(72) Inventors:
• **WANG, Ye**
  **Cambridge**
  **Massachusetts 02139-1955 (US)**
• **YU, Xi**
  **Cambridge**
  **Massachusetts 02139-1955 (US)**
• **SMEDEMARK-MARGULIES, Niklas**
  **Cambridge**
  **Massachusetts 02139-1955 (US)**
• **AERON, Shuchin**
  **Cambridge**
  **Massachusetts 02139-1955 (US)**
• **AKINO, Toshiaki**
  **Cambridge**
  **Massachusetts 02139-1955 (US)**
• **MOULIN, Pierre**
  **Cambridge**
  **Massachusetts 02139-1955 (US)**
• **BRAND, Matthew**
  **Cambridge**
  **Massachusetts 02139-1955 (US)**
• **PARSONS, Kieran**
  **Cambridge**
  **Massachusetts 02139-1955 (US)**

(74) Representative: **Pfenning, Meinig & Partner mbB**
**Patent- und Rechtsanwälte**
**Theresienhöhe 11a**
**80339 München (DE)**

(56) References cited:
• **WEIZHU QIAN ET AL: "Learning Robust Variational Information Bottleneck with Reference", ARXIV.ORG, CORNELL UNIVERSITY LIBRARY, 201 OLIN LIBRARY CORNELL UNIVERSITY ITHACA, NY 14853, 29 April 2021 (2021-04-29), XP081945747**

EP 4 288 912 B1

- SHUO WANG ET AL: "Defending Adversarial Attacks via Semantic Feature Manipulation", ARXIV.ORG, CORNELL UNIVERSITY LIBRARY, 201 OLIN LIBRARY CORNELL UNIVERSITY ITHACA, NY 14853, 4 February 2020 (2020-02-04), XP081649950

- MINSEON KIM ET AL: "Adversarial Self-Supervised Contrastive Learning", ARXIV.ORG, CORNELL UNIVERSITY LIBRARY, 201 OLIN LIBRARY CORNELL UNIVERSITY ITHACA, NY 14853, 26 October 2020 (2020-10-26), XP081798911

## Description

[Technical Field]

The present disclosure relates generally to adversarial data perturbations, and more specifically to a method and a system for training a neural network for improving aversarial robustness.

[Background Art]

In recent advances, machine learning and deep neural networks have been widely used for the classification of data. However, machine learning models are often vulnerable to attacks based on adversarial manipulation of the data. The adversarial manipulation of the data is known as an adversarial example. The adversarial example is a sample of the data that is intentionally modified with small feature perturbations. These feature perturbations are intended to cause a machine learning or deep neural network (ML/DNN) model to output an incorrect prediction. In particular, the feature perturbations are imperceptible noise to the data causing an ML classifier to misclassify the data. Such adversarial examples can be used to perform an attack on ML systems, which poses security concerns. The adversarial examples pose potential security threats for ML applications, such as robots perceiving the world through cameras and other sensors, video surveillance systems, and mobile applications for image or sound classification.

The adversarial example attack is broadly categorized into two classes of threat models, such as a white-box adversarial attack and a black-box attack. In the white-box adversarial attack, an attacker accesses the parameters of a target model. For instance, the attacker accesses the parameters, such as architecture, weights, gradients, or the like of the target model. The white-box adversarial attack requires strong adversarial access to conduct a successful attack. Additionally, such white-box adversarial attack suffers higher computational overhead, for example, time and attack iterations. In contrast, in the black-box adversarial attack, the adversarial access of the parameters of the target model is limited. For example, the adversarial access only includes accessing example input data and output data pairs for the target model. Alternatively, in the black-box adversarial attack, any information of the target model is not used. In such an adversarial attack, a substitute or a source model is trained with training data to generate an adversarial perturbation. The generated adversarial perturbation is added to the input data to attack a target black-box DNN. For example, an input image is inputted to the substitute model to generate an adversarial perturbation. The adversarial perturbation is then added to the input image to attack the target black-box DNN. In some cases, a model query is used to obtain information from the target black-box DNN.

Traditional techniques for making machine learning models more robust, such as weight decay and dropout, generally do not provide a practical defense against adversarial examples. So far, only two methods, i.e., adversarial training and defensive distillation, have provided a significant defense. Adversarial training is a brute force solution that generates a lot of adversarial examples and explicitly trains the model not to be fooled by them. Defensive distillation is a strategy that trains the model to output probabilities of different classes, rather than hard decisions about which class to output. The probabilities are supplied by an earlier model, trained on the same task using hard class labels. This creates a model whose surface is smoothed in the directions an adversary will typically try to exploit, making it difficult for them to discover adversarial input tweaks that lead to incorrect categorization.

An example for an approach from the prior art to train a variational information bottleneck that improves its robustness to adversarial perturbations can be found in WEIZHU QIAN ET AL: "Learning Robust Variational Information Bottleneck with Reference", 29 April 2021 , XP0819457 4 7. Moreover, SHUO WANG ET AL: "Defending Adversarial Attacks via Semantic Feature Manipulation", 4 February 2020, XP081649950 disclose a one off and attack-agnostic Feature Manipulation (FM)-Defense to detect and purify adversarial examples in an interpretable and efficient manner. Lastly, MINSEON KIM ET AL: "Adversarial Self-Supervised Contrastive Learning", 26 October 2020, XP081798911 discloses an adversarial attack for unlabeled data, which makes the model confuse the instance-level identities of the perturbed data samples.

However, adversarial examples are hard to defend against because it is difficult to construct a theoretical model of the adversarial example crafting process. Adversarial examples are solutions to an optimization problem that is non-linear and non-convex for many ML models, including neural networks. Adversarial examples are also hard to defend against because they require machine learning models to produce good outputs for every possible input. Most of the time, machine learning models work very well but only work on a small amount of all the many possible inputs they could encounter.

In addition, current techniques for making machine learning models more robust are not adaptive as they may block one kind of attack, but leave vulnerability open to another attacker. To that end, designing a defense that can protect against a powerful, adaptive attacker is an important, but so far an unsolved technical problem.

Accordingly, there is a need to overcome the above-mentioned problems. More specifically, there is a need to develop a method and system for training the neural network for improving adversarial robustness of the neural network while retaining the natural accuracy.

[Summary of Invention]

It is an object of some embodiments to provide a system and a method for training robust neural network models with improved resilience to adversarial attacks. Additionally or alternatively, it is an object of some embodiments to provide a system and a method to classify input data using a trained neural network with improved adversarial robustness. Additionally or alternatively, it is an object of some embodiments to provide a system and a method to classify the input data probabilistically to improve the accuracy of the classification under adversarial attacks or free from adversarial attacks.

To that end, some embodiments disclose a neural network that includes a probabilistic encoder configured to encode input data of a plurality of data samples into a distribution over a latent space representation and a classifier configured to classify an encoding of the input data in the latent space representation. The probabilistic encoder is contrasted with a deterministic encoder. While the deterministic encoder encodes the input data into the latent space representation, the probabilistic encoder encodes the input data into a distribution over the latent space representation. For example, to encode the input data in the distribution of the latent space representation, the probabilistic encoder can output parameters of the distribution.

First, the classifier does not classify the distribution over the latent space representation but an instance (first instance or second instance) of the latent space representation or a sample of the distribution encoded by the probabilistic encoder. This allows sampling the output of the probabilistic encoder multiple times to combine the results of the classification for more accurate classification results.

Second, the probabilistic encodings allow improving the training of the neural network by imposing additional requirements not only on the classification results but also on the distribution over the latent space representation itself. Both of these advantages, alone or in combination improve the adversarial robustness of the trained neural network.

For example, some embodiments are based on a recognition that the performance of machine learning methods is dependent on the choice of data representation, and the goal of representation learning is to transform a raw input x to a lower-dimensional representation z that preserves the relevant information for tasks such as classification or regression. The adversarial examples are solutions to an optimization problem that is non-linear and non-convex for many ML models. Some embodiments are based on a realization that it is challenging to provide theoretical tools for describing the solutions to these complicated optimization problems. The information bottleneck (IB) principle provides an information-theoretic method for representation learning, where a representation should contain only the most relevant information from the input for downstream tasks. Representations learned by the IB principle are less affected by nuisance variations and maybe more robust to adversarial perturbations. In addition, the multi-view information bottleneck can extend the IB principle to a multi-view unsupervised setting by maximizing the shared information between different views, while minimizing the view-specific information.

Some embodiments are based on a realization that it is possible to extend the multi-view information bottleneck method to a supervised setting with adversarial training. For example, some embodiments can consider adversarial examples as another view of corresponding clean samples. As a result, the embodiments seek to learn representations that contain the shared information between clean samples and corresponding adversarial samples, while eliminating information not shared between them. As described above, having the probabilistic encoder that encodes the input data into the distribution over the latent space representation rather than encoding into the instance of the latent space representation allows different embodiments to explore the theoretical guarantees provided by the principles of the multi-view information bottleneck to improve the robustness and/or performance of the trained neural network.

To take advantage of these principles, some embodiments train shared parameters of different instances of the neural network using pairs of clean and adversarial data samples by optimizing a multi-objective loss function of outputs of the different instances. Because the different instances are the instances of the same neural network including the probabilistic encoder and the classifier, the outputs of the different instances (the first instance and the second instance) include parameters of the probabilistic distribution of the latent space representation and the results of classification. By comparing and optimizing the difference of these outputs, the resilience to adversarial attacks is improved.

Accordingly, one embodiment discloses a computer-implemented method for training a neural network. The method includes collecting a plurality of data samples comprising clean data samples and adversarial data samples. The training of the neural network includes training of a probabilistic encoder to encode the plurality of data samples into a probabilistic distribution over a latent space representation. In addition, the training of the neural network comprising training of a classifier to classify an instance of the latent space representation to produce a classification result. In addition, the method includes training shared parameters of a first instance of the neural network using the clean data samples and a second instance of the neural network using the adversarial data samples. Further, the method includes outputting the shared parameters of the first instance of the neural network and the second instance of the neural network.

Accordingly, another embodiment discloses an AI system for training a neural network. The AI system includes a processor; and a memory having instructions stored thereon. The processor is configured to execute the stored instructions to cause the AI system to collect a plurality of data samples as input for training the neural network. The plurality of data samples comprising clean data samples and adversarial data samples. The training of the neural network includes training of a probabilistic encoder to encode the plurality of data samples into a probabilistic distribution over a latent space representation. In addition, the training of the neural network includes training of a classifier to classify an instance of the latent space representation to produce a classification result. Further, the processor cause the AI system to train shared parameters of a first instance of the neural network using the clean data samples and a second instance of the neural network using the adversarial data samples. Furthermore, the processor causes the AI system to output the shared parameters of the first instance of the neural network and the second instance of the neural network.

[Brief Description of Drawings]

[Fig. 1]

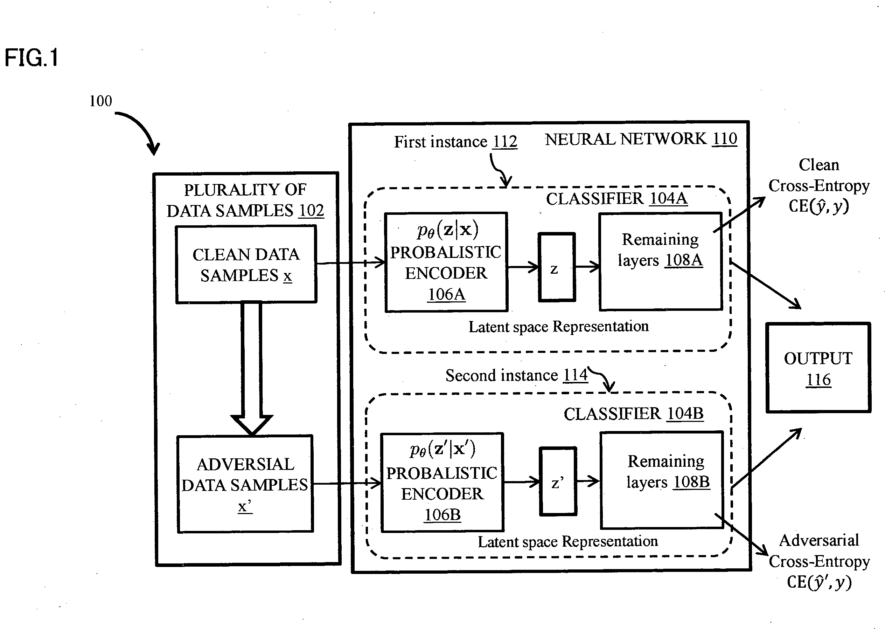

Fig. 1 is a schematic block diagram of a system for training a neural network for improving adversarial robustness, according to some embodiments of the present disclosure.
[Fig. 2A]

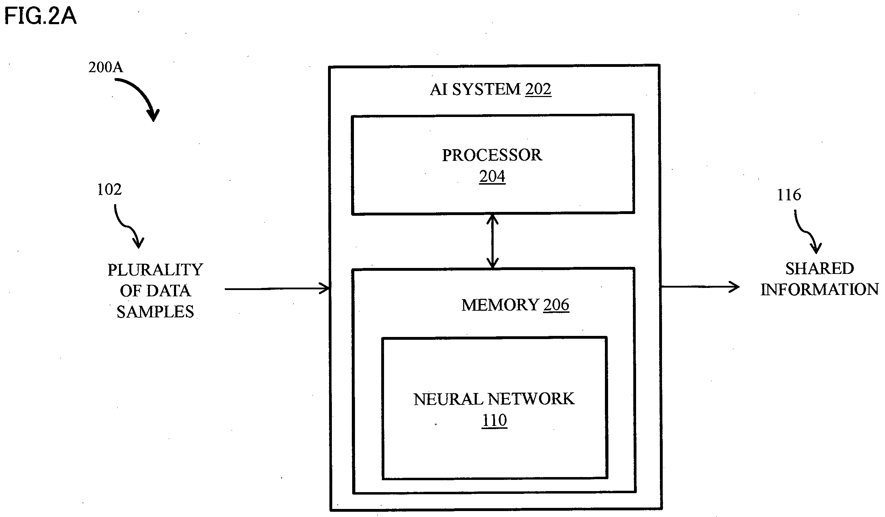

Fig. 2A is a schematic diagram of an AI system for training a neural network for improving adversarial robustness, according to some embodiments of the present disclosure.
[Fig. 2B]

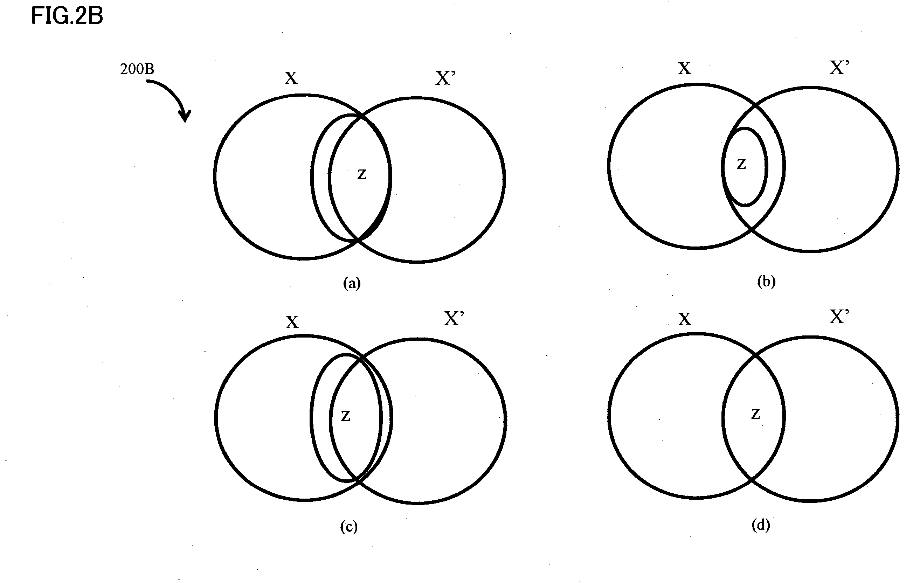

Fig. 2B is block diagram of representation of z with respect to x and x' for sufficiency and minimality of mutual information, in accordance with various embodiments of the present disclosure.
[Fig. 3]

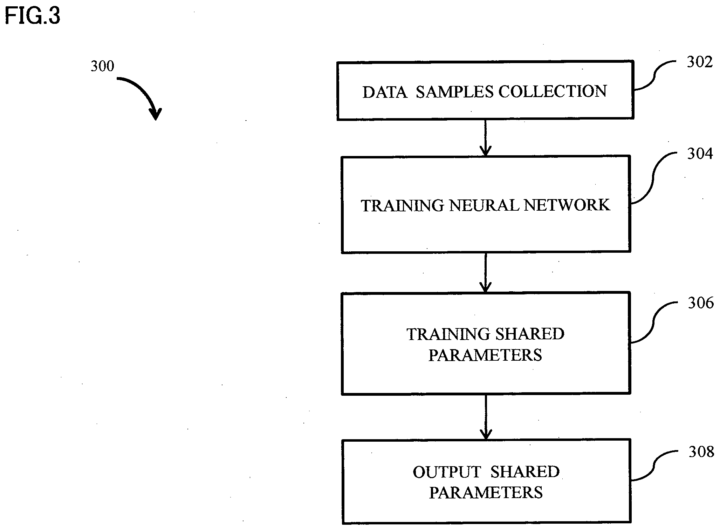

Fig. 3 is a diagrammatric representation depicting a procedure for training the neural network for improving adversarial robustness, according to some embodiments of the present disclosure.
[Fig. 4]

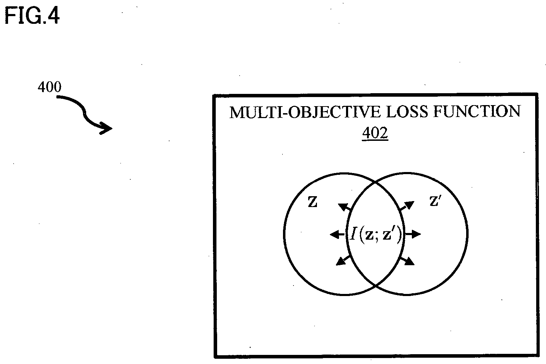

Fig. 4 is a representation depicting a multi-objective loss function, according to some embodiments of the present disclosure.
[Fig. 5]

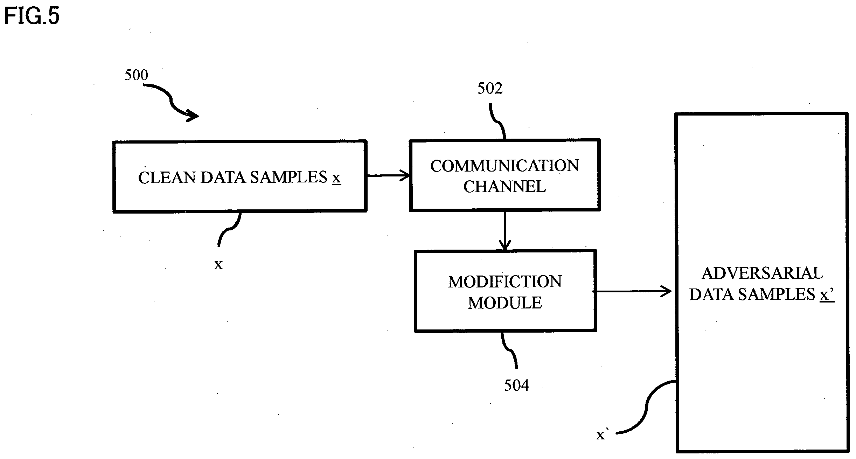

Fig. 5 is a block diagram of the AI system for generating the adversarial data samples for training the neural network, according to some embodiments of the present invention.
[Fig. 6]

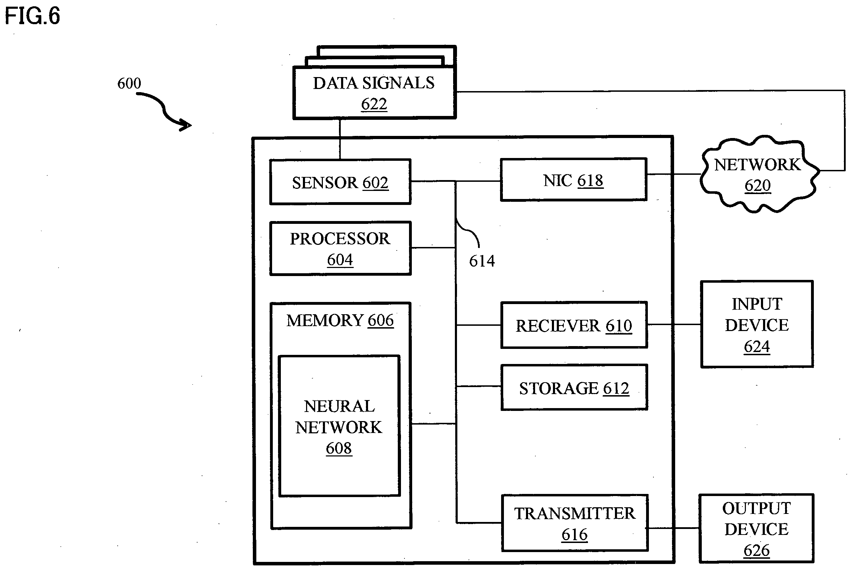

Fig. 6 is a block diagram of a computer-based system for improving adversarial robustness, according to some embodiments of the present invention.
[Fig. 7]

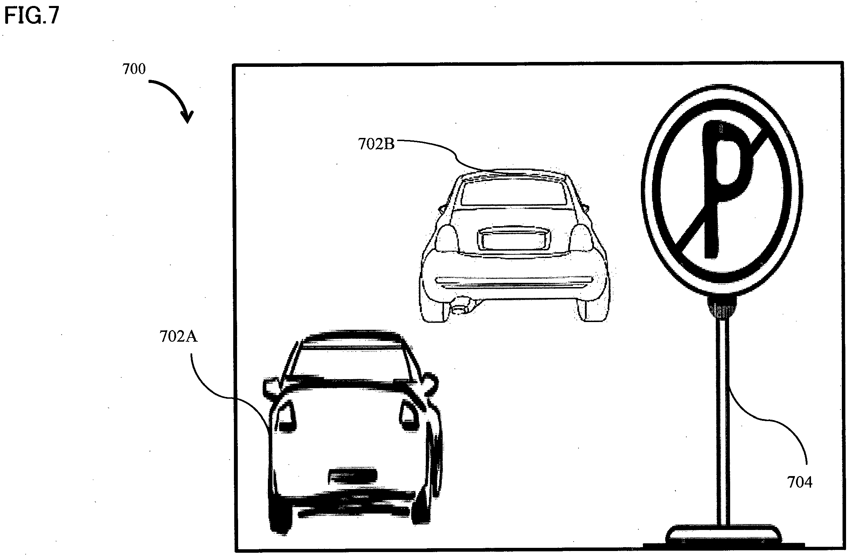

Fig. 7 is a use case of using the AI system, according to some other embodiments of the present disclosure.

[Description of Embodiments]

In the following description, for purposes of explanation, numerous specific details are set forth in order to provide a thorough understanding of the present disclosure. It will be apparent, however, to one skilled in the art that the present disclosure may be practiced without these specific details. In other instances, apparatuses and methods are shown in block diagram form only in order to avoid obscuring the present disclosure.

As used in this specification and claims, the terms "for example", "for instance", and "such as", and the verbs "comprising", "having", "including", and their other verb forms, when used in conjunction with a listing of one or more components or other items, are each to be construed as open ended, meaning that that the listing is not to be considered as excluding other, additional components or items. The term "based on" means at least partially based on. Further, it is to be understood that the phraseology and terminology employed herein are for the purpose of the description and should not be regarded as limiting. Any heading utilized within this description is for convenience only and has no legal or limiting effect.

FIG. 1 shows a schematic block diagram of a system 100 for training a neural network, such as a neural network 110 for improving adversarial robustness, according to some embodiments of the present disclosure. The system 100 includes a plurality of data samples 102, the neural network 110, a classifier 104A, a classifier 104B, a probabilistic encoder 106A, and a probabilistic encoder 106B.

The system 100 collects the plurality of data samples 102 as input for training the neural network 110. In some embodiments, the plurality of data samples 102 includes clean data samples x and adversarial data samples x'. The clean data samples x herein refers to correct data samples used for training of the neural network 110. The adversarial data samples x' herein refers to incorrect data samples (for example, data samples with some perturbations) used for the training of the neural network 110. Additionally, the training of the neural network 110 includes training of the probabilistic encoder 106A to encode the plurality of data samples *(i.e.,* the clean data samples x) into a probabilistic distribution (for example, with an associated clean cross-entropy CE($\hat{y}$,y)) over a latent space representation z. The training of the neural network 110 includes training of the classifier 104A to classify an instance (for example, a first instance 112) of the latent space representation z to produce a classification result.

More specifically, the system 100 is configured to initially train the neural network 110 based on the clean data samples x. The clean data samples x are fed as an input to the probabilistic encoder 106A. The probabilistic encoder 106A is further configured to generate a stochastic representation *(i.e.,* intermediate representation) z based upon execution of the probabilistic encoder 106A. The stochastic representation corresponds to the latent space representation z. The stochastic representation z is passed through remaining layers 108A. The remaining layers 108A corresponds to the hidden layers of the neural network 110. Furthermore, the system 100 is configured to train the probabilistic encoder 106A based on the clean cross-entropy CE ($\hat{y}$ ,y).

Similarly, the training of the neural network 110 includes training of the probabilistic encoder 106B to encode the plurality of data samples *(i.e.,* the adversarial data samples x') into a probabilistic distribution over a latent space representation z'. The training of the neural network 110 includes training of a classifier 104B to classify an instance (for example, a second instance 114) of the latent space representation z' to produce a classification result.

More specifically, the system 100 is configured to initially train the neural network 110 based on the adversarial data samples x'. The adversarial data samples x' are fed as an input to the probabilistic encoder 106B. The probabilistic encoder 106B is further configured to generate a stochastic representation *(i.e.,* intermediate representation) z' based upon execution of the probabilistic encoder 106B. The stochastic representation z' is passed through hidden layers 108B. Furthermore, the system 100 is configured to train the probabilistic encoder 106B based on the adversarial cross-entropy CE ($\hat{y}'$, y).

The system 100 is further configured to train shared parameters of the first instance 112 of the neural network 110 using the clean data samples x. Similarly, the system 100 is configured to train shared parameters of the second instance 114 of the neural network 110 using the adversarial data samples x'.

Furthermore, the system 100 is configured to generate an output 116 based on the shared parameters of the first instance 112 of the neural network 110 and the second instance 114 of the neural network 110. In this manner, the neural network 110 is trained based on the stochastic representation z corresponding to the clean data samples x as well as the stochastic representation z' corresponding to the adversarial data samples x'.

In one embodiment, the system 100 is configured to train the neural network 110 such that the stochastic representations z and z' contain shared information *(i.e.,* mutual information) between x and x'. To achieve this, the system 100 is configured to minimize Kullback-Leibler divergence (KL-divergence) between the latent space distribution produced by the probabilistic encoder 106A and the latent space distribution produced by the probabilistic encoder 106B, and maximize the shared information *(i.e.,* mutual information) between z and z'.

The system 100 is an artificial intelligence-based system (herein after AI system) that is further explained in FIG. 2A,2B.

FIG. 2A shows a schematic block diagram 200A of an AI system 202 for training a neural network, such as the neural network 110 for improving adversarial robustness, according to some embodiments of the present disclosure. The AI system 202 includes a processor 204 and a memory 206. The memory 206 stores instructions to be executed by the processor 204. The memory 206 also includes the neural network 110. The processor 204 is configured to execute the stored instructions to cause the AI system 202 to collect the plurality of data samples 102 as input for training the neural network 110.

In some embodiments, examples of the processor 204 include, but are not limited to, an application-specific integrated circuit (ASIC) processor, a reduced instruction set computing (RISC) processor, a complex instruction set computing (CISC) processor, graphical processing unit (GPU), a field-programmable gate array (FPGA), and the like. In some embodiments, the memory 206 includes suitable logic, circuitry, and/or interfaces to store a set of computer-readable instructions for performing operations. Additionally, examples of the memory 206 may include a random-access memory (RAM), a read-only memory (ROM), a removable storage drive, a hard disk drive (HDD), and the like. It will be apparent to a person skilled in the art that the scope of the disclosure is not limited to realizing the memory 206 in the AI system 202, as described herein.

As shown in FIG. 2A, the plurality of data samples 102 is fed as an input to the AI system 202. The AI system 202 invokes the processor 204 to execute the stored instructions in the memory 206 to start training of the neural network 110.

In some embodiments, the plurality of data samples 102 includes the clean data samples x and the adversarial data samples x'. The AI system 202 is configured to train the neural network 110 to improve the adversarial robustness of the neural network 110. In some embodiments, the neural network 110 includes a deep neural network (DNN), and the like. In some embodiments, the AI system 202 is configured to perform training of the neural network 110 in a supervised setting.

In some embodiments, the AI system 202 is configured to train the neural network 110 based on a multi-objective loss function. The AI system 202 is configured to train the neural network 110 with an objective of (1) maximizing a shared information 116 between the stochastic representations of matched pairs and (2) minimizing the shared information 116 between each stochastic representation and its corresponding view conditioned on the other view, along with (3) the clean cross-entropy loss, and (4) the adversarial crossentropy loss. For example, the item (1) corresponds to maximizing the mutual information objection, and item (2) corresponds to minimizing the KL-divergence objective.

The AI system 202 is configured to improve the adversarial robustness based on maximizing the shared information 116 between the stochastic representations z and z' corresponding to the matched pairs of clean data samples x and the adversarial data samples x', as captured by the objective of maximizing the mutual information between z and z'. Additionally, the objective of training of the neural network 110 includes symmetrized KL-divergence between the posterior feature distribution the clean data samples x and the adversarial data samples x', and the shared information 116 between the latent representation of the clean data samples x and the adversarial data samples x'.

For example, a dataset $\{(x_i, y_i)\}_{i=1, \ldots, n}$ with K classes is given, where $x_i \in \mathbb{R}^d$ is a clean data sample and $y_i \in \{1, \ldots, K\}$ is its associated label. Further f is a classifier with parameters $\theta$, and the output of the classifier $f_\theta(x_i)$ are the estimated probabilities of $x_i$ belonging to each class. In traditional adversarial training, the learning problem objective is defined as:

$$\min_\theta \mathbb{E} \left[ \max_{x' \in \mathcal{B}(x, \epsilon)} \mathcal{L}(f_\theta(x'), y) \right]$$

Here, $\mathcal{L}$ is the cross-entropy loss and the adversary searches for an example x', belonging to $\mathcal{B}(x, \epsilon) = \{x' : x + \sigma \| \sigma \|_p \leq \epsilon$, by maximizing the cross-entropy loss with respect to a small perturbation $\sigma$.

The AI system 202 is configured to learn the latent space representations z and z' (corresponding to x and x', respectively), which only contains the useful information shared by both x and x'. Mathematically, the generation of these representations are defined by conditional distributions p(z|x) and p(z'|x'), while satisfying the Markov chain $z \to x \to x' \to z'$.

The AI system 202 is further configured to improve generalization by learning representations z or z' that capture only information shared between x and x'. If the representation preserves only the shared information 116 (*i.e.,* the mutual information) from both x and x', that means it includes only task-relevant information, while discarding view-specific details (*i.e.*, misleading information from x') and therefore, adversarial robustness of the neural network 110 is improved.

2B illustrates block diagram 200B of representation of z with respect to x and x' for sufficiency and minimality of mutual information, in accordance with various embodiments of the present disclosure.

Let us consider subdividing I (z; x) into three components by using the chain rule of mutual information, and since the Markov chain $z \to x \to x'$ holds,

$$I(z; x) = I(x; z|x') + I(x; x') - I(x; x'|z).$$

Here, I (x; z|x') represents the information in z which is unique to x and not shared by x', which is termed as view-specific information. The second term I (x; x') denotes the shared information 116 between x and x'. The last term I (x; x'|z) is the shared information 116 that is missing in z. The main objective here is for the representation z to only contain the shared information 116 of x and x', so that I (x; z) = I (x; x'). Thus, the objective here is to minimize I (x; z|x') and I (x; x'|z). The representation z is defined as sufficient and minimal for any downstream task, as it contains all the task-relevant information (sufficiency) without any irrelevant information (minimality).

The block diagram 200B includes representation (a) for sufficient but not minimal mutual information: I(x; z|x 0 ) > 0, I(x; x 0 |z) = 0. In addition, the block diagram 200B includes representation (b) for minimal but not sufficient mutual information: I(x; z|x 0 ) = 0, I(x; x 0 |z) > 0. The block diagram 200B includes representation (c) for not sufficient and not minimal mutual information: I(x; z|x 0 ) > 0, I(x; x 0 |z) > 0. Furthermore, the block diagram 200B includes representation (d) for sufficient and minimal mutual information: I(x; z|x 0 ) = 0, I(x; x 0 |z) = 0. The mutual information between x is exactly equal to the shared information of x and x'.

FIG. 3 shows a diagrammatric representation depicting a procedure 300 for training the neural network 110, according to some embodiments of the present disclosure. The procedure 300 is performed by the AI system 200.

At step 302, a plurality of data samples 102 is collected. The plurality of data samples 102 includes clean data samples x and adversarial data samples x'. The clean data samples x herein refers to correct data samples used for training of the neural network 110. The adversarial data samples x' herein refers to incorrect data samples (for example, data samples with some perturbations) used for the training of the neural network 110.

At step 304, training of the neural network 110 is performed. The training of the neural network 110 includes encoding of the plurality of data samples 102 into a probabilistic distribution over a latent space representations z and z'.

The plurality of data samples 102 are encoded using probabilistic encoder 106A and 106B. The probabilistic encoder 106A and 106B encodes the plurality of data samples (*i.e.,* the clean data samples x and the adversarial data samples x') into a probabilistic distribution (for example, clean cross-entropy CE ($\hat{y}$, y)) and adversarial cross-entropy CE ($\hat{y}$', y)) over the latent space representation z and z', respectively. The training of the neural network 110 further includes training of the classifier 104A and 104B to classify an instance (for example, a first instance 112 and a second instance 114) of the latent space representation z and z' to produce a classification result.

At step 306, shared parameters of the first instance 112 of the neural network 110 and the second instance 114 of the neural network 110 are trained. The shared parameters of the first instance 112 of the neural network 110 are trained using the clean data samples x. The shared parameters of the second instance 114 of the neural network using the adversarial data samples x'.

The neural network 110 is trained based on a multi-objective loss function. The first instance 112 of the neural network 110 and the second instance 114 of the neural network 110 are jointly trained to minimize the multi-objective loss function of a difference between corresponding outputs of the first instance 112 and the second instance 114. The corresponding outputs comprising a difference between the probabilistic distribution determined by the probabilistic encoders 106A and 106B of the first instance 112 and the second instance 114 of the neural network 110 and the classification result determined by the classifier 104A and 104B of the first instance 112 and the second instance 114 of the neural network 110. The joint training of the first instance 112 of the neural network 110 and the second instance 114 of the neural network 114 is performed with the latent representations z and z' for the clean data samples x and the adversarial samples x' respectively that are sampled multiple times.

The AI system 202 is configured to train the neural network 110 with an objective of (1) maximizing a shared information 116 between the stochastic representations of matched pairs and (2) minimizing the shared information 116 between each stochastic representation and its corresponding view conditioned on the other view, along with (3) the clean cross-entropy loss, and (4) the adversarial crossentropy loss.

The AI system 202 is configured to improve the adversarial robustness based on learning of the shared information 116 or the output between the clean data samples x and the adversarial data samples x'. Additionally, the objective of training of the neural network 110 includes symmetrized KL-divergence between the posterior feature distribution the clean data samples x and the adversarial data samples x', and the shared information 116 between the latent representation of the clean data samples x and the adversarial data samples x'.

At step 308, the shared parameters of the first instance 112 and the second instance 114 of the neural network 110 are outputted.

FIG. 4 shows a representation 400 depicting a multi-objective loss function 402, according to the present disclosure. The neural network 110 of FIG. 1 is trained to parameterize the multi-objective loss function based on mutual information of the distributions over the latent space representation z and z' determined by the probabilistic encoder 106A and 106B of the first instance 112 and the second instance 114 of the neural network 110 respectively and entropy losses (CE ($\hat{y}$, y), CE ($\hat{y}$', y)) of the classification result produced by the first instance 112 and the second instance 114 of the neural network 110.

Additionally, the multi-objective loss function 402 includes terms corresponding to maximizing the mutual information between the probabilistic distributions of encodings of pairs of the clean data samples x and the adversarial data samples x', minimizing mutual information between encodings of one of the clean data samples x or the adversarial data samples x' in the pair conditioned on another data sample in the pair, a clean cross-entropy loss determined for classifying the clean data samples x, and an adversarial cross-entropy loss determined for classifying the adversarial data samples x'.

As explained above in FIG. 2A,2B, the AI system 202 is configured to learn a representation including only the shared information of x and x' by minimizing the view-specific information (I (x; z|x')) and shared information not in z (I (x; x'| z)). In particular, minimizing I (x; x'|z) is equivalent to maximizing I (z; x'), because I (z; x') = I (x; x') - I (x; x'|z) and given x and x', I (x; x') is constant. Therefore, a relaxed Lagrangian objective $\mathcal{L}_1$ may be used to obtain a representation z that is sufficient and minimal with respect to x and x' as:

$$\mathcal{L}_1 = I\big(x; z\big|x^{\text{\textasciigrave}}\big) - \lambda_1 . I(z; x^{\text{\textasciigrave}})$$

Symmetrically, a relaxed Lagrangian objective $\mathcal{L}_2$ may be used to obtain a representation z' that is sufficient and minimal with respect to x' and x may be obtained as:

$$\mathcal{L}_2 = I\big(x^{\text{\textasciigrave}}; z^{\text{\textasciigrave}}\big|x\big) - \lambda_2 . I(z^{\text{\textasciigrave}}; x)$$

Here, $\lambda_1$ and $\lambda_2$ represent the Lagrangian multipliers for the the constrained optimization. The objective function involves two mutual information terms that are hard to calculate directly. To solve this problem, some alternative bounds for these two mutual information terms are derived.

**Upper Bound of I (x; z|x')**: Initially, an upper bound of view-specific information in the latent representation z is derived from input. For example, I (x; z|x') may be calculated as:

$$I(x;z|x') = E_{p(x,x',z)}\left[\log\frac{p(z|x)p(x|x')}{p(x|x')p(z|x')}\right]$$

$$= E_{p(x,x',z)}\left[\log\frac{p(z|x)}{p(z|x')}\right]$$

$$= E_{p(x,x`,z)}\left[\log\frac{p(z|x)p(z'|x')}{p(z'|x')p(z|x')}\right]$$

$$= D_{KL}(p(z|x)||p(z'|x')) - D_{KL}(p(z|x')||p(z'|x'))$$

$$\leq D_{KL}(p(z|x)||p(z'|x'))$$

Here, the conditional distributions p(z|x) and p(z'|x') may be parameterized by an encoder network. Additionally, this bound is tight whenever the representation z is the same as z'. Symmetrically, I (x'; z|x) is upper bounded by $D_{KL}(p(z'|x')||p(z|x))$.

**Lower Bound of I (z; x')**: Further, a lower bound on the mutual information between the clean representation and the corresponding adversarial sample is derived. I (z; x') may be calculated as:

$$I (z; x') = I (z; z', x') - I (z; z'|x')$$

$$= I (z; z', x')$$

$$= I (z; z') + I (z; x'|z')$$

$$\geq I (z; z')$$

Here, I (z; z'|x') = 0, because z', as the representation of x', is part of the Markov chain $z \rightarrow x \rightarrow x' \rightarrow z'$. It is to be noted that while the bound is also immediate from this Markov chain and the data processing inequality, the derivation above illustrates that the bound is tight when z' is a sufficient statistic of z. Symmetrically, a similar bound may be derived for I (z'; x) $\geq$ I (z; z'). Conceptually, this lower bound captures our goal of preserving the information shared between the representations regardless of the adversarial perturbation.

Furthermore, $\mathcal{L}_1$ and $\mathcal{L}_2$ are combined so that the representations z and z' may contain the shared information between x and x'. Based on the bounds derived above, the multi-objective loss function $\mathcal{L}_{shared}$ is obtained, which is an upper bound on the average of $\mathcal{L}_1$ and $\mathcal{L}_2$. The objective function $\mathcal{L}_{shared}$ may be defined as:

$$\mathcal{L}_{shared} = \frac{1}{2}(\mathcal{L}_1 + \mathcal{L}_2)$$

$$= \frac{I(x;z|x') + I(x';z'|x)}{2} - \frac{\lambda_1(x;z|x') + \lambda_2(x';z'|x)}{2}$$

$$\leq \frac{D_{KL}(p(Z|X)\|p(Z'|X')) + D_{KL}(p(Z'|X')\|p(z|x))}{2} - \frac{\lambda_1 + \lambda_2}{2} \cdot I(z;z')$$

$$\leq D_{SKL}(p(z|x)\|p(z'|x')) - \lambda\ I(z;z1)$$

Here p(z|x) and p(z'|x') are modeled as Gaussian distributions parameterized by a neural network encoder $N(\mu_\theta$ (x), $\mathrm{diag}(\sigma_\theta^2(x)))$ and $N(\mu_\theta$ (x'), $\mathrm{diag}(\sigma_\theta^2(x')))$.

$D_{SKL}$ represents the symmetrized KL-divergence obtained by averaging $D_{KL}(p(z'|x')\|p(z|x))$ and $D_{KL}(p(z|x)\|p(z'|x'))$.

This symmetrized KL-divergence may be computed directly between two Gaussian posterior distributions. Alternatively, I (z; z') requires the use of a mutual information estimator. The present disclosure utilizes Hilbert Schmidt Independence Criterion (HSIC) to measure the independence between z and z', and use this value to replace mutual information term. It is to be noted that HSIC is used as a surrogate for mutual information because the dependence between two mini-batch samples in Reproducing Kernel Hilbert Space (RKHS) can be measured directly, without requiring any density estimation or using an additional network for mutual information estimation.

Moreover, the above regularization objective $\mathcal{L}_{shared}$ is combined with task label information to obtain our overall objective function for training the neural network model 110 as:

$$\mathcal{L} = \alpha.CE(f(x') + y) + (1 - \alpha).CE(f(x), y) + \beta.D_{SKL}(p(z|x)\|p(z'|x'))$$
$$- \lambda\ I(z;z')$$

Here $\alpha \in [0, 1]$ balances the trade-off between the cross entropy loss on clean and adversarial samples. $\beta$ and $\lambda$ adjust the importance of symmetrized KL-divergence term and the mutual information term.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine readable medium. A processor(s) may perform the necessary tasks.

FIG. 5 shows a block diagram 500 of the AI system 202 for generating the adversarial data samples x' for training the neural network 110, according to some embodiments of the present invention. The block diagram 500 includes a communication channel 502 and a modification module 504. The AI system 202 is configured to collect the plurality of data samples by performing a first step and a second step. The AI system 202 performs the first step of receiving the clean data samples x over the communication channel 502. The communication channel 502 comprises one or a combination of a wired channel and a wireless channel. The AI system performs the second step of modifying each of the clean data samples x using the modification module 504 to generate a corresponding adversarial data sample forming the pairs of the clean data samples x and the adversarial data samples x'. The modification module 504 applies an adversarial example generation method on the clean data samples x. The adversarial example generation method comprises one of projected gradient descent method, fast-gradient sign method, limited-memory Broyden-Fletcher-Goldfarb-Shanno method, Jacobian-based saliency map attack, or Carlini & Wagner attack.

FIG. 6 shows a block diagram of a computer-based system 600 for improving adversarial robustness, in accordance with some embodiments of the present disclosure. The system 600 includes at least one processor 604 and a memory 606 having instructions stored thereon including executable instructions for being executed by the at least one processor 604 during controlling of the system 600. The memory 606 is embodied as a storage media such as RAM (Random Access Memory), ROM (Read Only Memory), hard disk, or any combinations thereof. For instance, the memory 606 stores instructions that are executable by the at least one processor 604. In one example embodiment, the memory 606 is configured to store a neural network 608. The neural network 608 corresponds to the neural network 110 of FIG. 1.

The at least one processor 604 is be embodied as a single core processor, a multi-core processor, a computing cluster, or any number of other configurations. The at least one processor 604 is operatively connected to a sensor 602, a receiver 610 via a bus 614. In an embodiment, the at least one processor 604 is configured to collect a plurality of data samples. In some example embodiments, the plurality of data samples is collected from a receiver 610. The receiver 610 is connected to an input device 624 via a network 620. Each of the plurality of data samples is stored in storage 612. In some other example embodiments, the plurality of data samples is collected from the sensor 602. The sensor 602 receives a data signal 622 measure from a source (not shown). In some embodiments, the sensor 602 is configured to sense the data signal 622 based on a source of the sensed data signal 622.

Additionally or alternatively, the system 600 is integrated with a network interface controller (NIC) 618 to receive the plurality of data samples 102 (of FIG. 1) using the network 620. The plurality of data samples includes clean data samples and adversarial data samples.

The at least one processor 604 is also configured to train the neural network 608 for improving adversarial robustness. The training of the neural network 608 includes encoding of the plurality of data samples 102 into a probabilistic distribution over a latent space representation. The plurality of data samples 102 are encoded using probabilistic encoder.

The trained neural network 608 generates output of shared information that is transmitted via a transmitter 616. Additionally or alternatively, the transmitter 616 is coupled with an output device 626 to output the shared information over a wireless or a wired communication channel, such as the network 620. The output device 626 includes a computer, a laptop, a smart device, or any computing device that is used for preventing adversarial attacks in applications installed in the output device 626.

Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine readable medium. A processor(s) may perform the necessary tasks.

FIG. 7 shows a use case 700 of using the AI system 202, according to some other embodiments of the present disclosure. The use case 700 corresponds to vehicle assistance navigation system (not shown) of a vehicle 702A and a vehicle 702B. The vehicle assistance navigation system is connected with the AI system 202. The vehicle assistance navigation system is connected to a camera of the vehicle 702A, such as a front camera capturing road scenes or views. In one illustrative example scenario, the camera captures a road sign 704 that displays "No Parking" sign. The captured road sign 704 is transmitted to the AI system 202. The AI system 202 processes the captured road sign 704 using the trained neural network 110. The captured road sign 704 is processed using the clean data samples and the adversarial data samples to generate a robust model for identifying the "No Parking" sign in the road sign 704. The robust model is used by the vehicle assistance navigation system to accurately identify the road sign 704 and prevent the vehicle 702A and the vehicle 702B from parking at no parking zone.

Lastly, one embodiment of the subject-matter relates to a computer-implemented method for training a neural network, wherein the method uses a processor coupled with stored instructions implementing the method, wherein the instructions, when executed by the processor carry out steps of the method, comprising:

collecting pairs of clean and adversarial data samples for training the neural network including a probabilistic encoder trained to encode input data samples into a probabilistic distribution over a latent space and a classifier trained to classify an instance of the latent space to produce a classification result;

training jointly parameters of a first instance of the neural network using clean data samples and parameters of a second instance of the neural network using the adversarial data samples, such that the first instance of the neural network and the second instance of the neural network are jointly trained to minimize a multi-objective loss function of a difference between corresponding outputs of the first and the second instances of the neural network determined for the pairs of clean and adversarial data samples, the corresponding outputs including a difference between the probabilistic distributions determined by the probabilistic encoders of the first and the second instances of the neural network and the classification results determined by the classifiers of the first and the second instances of the neural network; and
output one or a combination of the parameters of the first instance of the neural network and the parameters of the second instance of the neural network.

The above-described embodiments of the present disclosure may be implemented in any of numerous ways. For example, the embodiments may be implemented using hardware, software, or a combination thereof. When implemented in software, the software code may be executed on any suitable processor or collection of processors, whether provided in a single computer or distributed among multiple computers. Such processors may be implemented as integrated circuits, with one or more processors in an integrated circuit component. Though, a processor may be implemented using circuitry in any suitable format.

Also, the various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine. Typically, the functionality of the program modules may be combined or distributed as desired in various embodiments.

Also, the embodiments of the present disclosure may be embodied as a method, of which an example has been provided. The acts performed as part of the method may be ordered in any suitable way. Accordingly, embodiments may be constructed in which acts are performed in an order different than illustrated, which may include performing some acts concurrently, even though shown as sequential acts in illustrative embodiments. Therefore, it is the object of the appended claims to cover all such variations and modifications as come within the true scope of the present disclosure.

Although the present disclosure has been described with reference to certain preferred embodiments, it is to be understood that various other adaptations and modifications can be made within the scope of the present disclosure. Therefore, it is the aspect of the append claims to cover all such variations and modifications as come within the true scope of the present disclosure.

## Claims

1. A computer-implemented method for training a neural network (110) for classifying a plurality of image data samples (102) captured by a camera, wherein the method uses a processor (204) that stores instructions for implementing the method, wherein the instructions, when executed, cause the processor (204) to perform the method, comprising:
collecting a plurality of data samples (102) as input for training the neural network (110), wherein the plurality of data samples (102) comprising clean data samples (x) and adversarial data samples (x'), wherein training of the neural network (110) comprising training of a probabilistic encoder (106A, 106B) to encode the plurality of data samples (102) into a probabilistic distribution over a latent space representation, wherein training of the neural network comprising training of a classifier (104A, 104B) to classify an instance of the latent space representation to produce a classification result; the method **characterized by** the method steps:

training shared parameters of a first instance (112) of the neural network (110) using the clean data samples (x) and a second instance (114) of the neural network (110) using the adversarial data samples (x'); and
outputting the shared parameters of the first instance (112) of the neural network (110) and the second instance (114) of the neural network (110); the method further comprising
parameterizing a multi-objective loss function (402) based on mutual information of the distributions over the latent space representation determined by the probabilistic encoder (106A, 106B) of the first instance (112) and the second instance (114) of the neural network (110) and entropy losses of the classification result produced by the first instance (112) and the second instance (114) of the neural network (110); wherein

the multi-objective loss function (402) comprises terms corresponding to maximizing mutual information between the probabilistic distributions of encodings of pairs of the clean data samples (x) and the adversarial data samples (x'), minimizing mutual information between encodings of one of the clean data samples (x) or the adversarial data samples (x') in the pair conditioned on another data sample in the pair, a clean cross-entropy loss determined for classifying the clean data samples (x), and an adversarial cross-entropy loss determined for classifying the adversarial data samples (x').

2. The method of claim 1, wherein the first instance (112) of the neural network (110) and the second instance (114) of the neural network (110) are jointly trained to minimize a multi-objective loss function (402) of a difference between corresponding outputs of the first instance (112) and the second instance (114), wherein the corresponding outputs comprising a difference between the probabilistic distribution determined by the probabilistic encoder (106A, 106B) of the first instance (112) and the second instance (114) of the neural network (110) and the classification result determined by the classifier (104A, 104B) of the first instance (112) and the second instance (114) of the neural network (110).

3. The method of claim 2, wherein the joint training of the first instance (112) of the neural network (110) and the second instance (114) of the neural network (110) is performed, wherein the joint training is performed with the latent representations for the clean data samples (x) and the adversarial samples (x') that are sampled multiple times.

4. The method of any of the preceding claims, wherein the collecting the plurality of data samples (102) comprises:

   receiving the clean data samples (x) over a communication channel (502), wherein the communication channel (502) comprises one or a combination of a wired channel and a wireless channel; and
   modifying each of the clean data samples (x) to generate a corresponding adversarial data sample (x') forming the pairs of the clean data samples (x) and the adversarial data samples (x').

5. The method of claim 4, wherein the modifying comprises:
   applying an adversarial example generation method on the clean data samples (x), wherein the adversarial example generation method comprises one of projected gradient descent method, fast-gradient sign method, limited-memory Broyden-Fletcher-Goldfarb-Shanno method, Jacobian-based saliency map attack, or Carlini & Wagner attack.

6. An artificial intelligence system, AI system (202), for training a neural network (110) for classifying a plurality of image data samples (102) captured by a camera, the AI system (202) comprising:
   a processor (204); and

   a memory (206) having instructions stored thereon, wherein the processor (204) is configured to execute the stored instructions to cause the AI system (202) to:
   collect a plurality of data samples (102) as input for training the neural network (110), wherein the plurality of data samples comprising clean data samples (x) and adversarial data samples (x'), wherein training of the neural network (110) comprising training of a probabilistic encoder (106A, 106B) to encode the plurality of data samples (102) into a probabilistic distribution over a latent space representation, wherein training of the neural network (110) comprising training of a classifier (104A, 104B) to classify an instance of the latent space representation to produce a classification result; **characterized in that** the processor (204) is configured to execute the stored instructions to cause the AI system (202) to:

   train shared parameters of a first instance (112) of the neural network (110) using the clean data samples (x) and a second instance (114) of the neural network (110) using the adversarial data samples (x'); and
   output the shared parameters of the first instance (112) of the neural network (110) and the second instance (114) of the neural network (110);

   wherein
   the AI system (202) is configured to parameterize a multi-objective loss function (402) based on mutual information of the distributions over the latent space representation determined by the probabilistic encoder (106A, 106B) of the first instance (112) and the second instance (114) of the neural network (110) and entropy losses of the classification result produced by the first instance (112) and the second instance (114) of the neural network (110);
   wherein
   the multi-objective loss function (402) comprises terms corresponding to maximizing mutual information between the probabilistic distributions of encodings of pairs of the clean data samples (x) and the adversarial data samples (x'), minimizing mutual information between encodings of one of the clean data samples (x) or the adversarial data samples (x') in the pair conditioned on another data sample in the pair, a clean cross-entropy loss determined for classifying the clean data samples (x), and an adversarial cross-entropy loss determined for classifying the adversarial data samples (x').

7. The AI system (202) of claim 6, wherein the first instance (112) of the neural network (110) and the second instance (114) of the neural network (110) are jointly trained to minimize a multi-objective loss function (402) of a difference between corresponding outputs of the first instance (112) and the second instance (114), wherein the corresponding outputs comprising a difference between the probabilistic distribution determined by the probabilistic encoder (106A, 106B) of the first instance (112) and the second instance (114) of the neural network (110) and the classification result determined by the classifier (104A, 104B) of the first instance (112) and the second instance (114) of the neural network (110).

8. The AI system (202) of claim 7, wherein the joint training of the first instance (112) of the neural network (110) and the second instance (114) of the neural network (110) is performed, wherein the joint training is performed with the latent representations for the clean data samples (x) and the adversarial samples (x') that are sampled multiple times.

9. The AI system (202) of any of the claims 6 to 8, wherein the AI system (202) is configured to collect the plurality of data samples (102) by performing a first step and a second step, wherein the AI system (202) performs the first step of receiving the clean data samples (x) over a communication channel (502), wherein the AI system (202) performs the second step of modifying each of the clean data samples (x) using a modification module (504) to generate a corresponding adversarial data sample (x') forming the pairs of the clean data samples (x) and the adversarial data samples (x').

10. The AI system (202) of claim 9, wherein the modifying module (504) is configured to apply an adversarial example generation method on the clean data samples (x), wherein the adversarial example generation method comprises one of projected gradient descent method, fast-gradient sign method, limited-memory Broyden-Fletcher-Goldfarb-Shanno method, Jacobian-based saliency map attack, or Carlini & Wagner attack.

11. A non-transitory computer-readable medium having stored thereon computer-executable instructions, for training a neural network (110) for classifying a plurality of image data samples (102) captured by a camera, which when executed by a computer (600), cause the computer (600) to execute operations, the operations comprising:
collecting a plurality of data samples (102) as input for training the neural network (110), wherein the plurality of data samples (102) comprising clean data samples (x) and adversarial data samples (x'), wherein training of the neural network (110) comprising training of a probabilistic encoder (106A, 106B) to encode the plurality of data samples (102) into a probabilistic distribution over a latent space representation, wherein training of the neural network (110) comprising training of a classifier (104A, 104B) to classify an instance of the latent space representation to produce a classification result;
**characterized by** the operations comprising:

training shared parameters of a first instance (112) of the neural network (110) using the clean data samples (x) and a second instance (114) of the neural network (110) using the adversarial data samples (x'); and
outputting the shared parameters of the first instance (112) of the neural network (110) and the second instance (114) of the neural network (110); the operations further comprising
parameterizing a multi-objective loss function (402) based on mutual information of the distributions over the latent space representation determined by the probabilistic encoder (106A, 106B) of the first instance (112) and the second instance (114) of the neural network (110) and entropy losses of the classification result produced by the first instance (112) and the second instance (114) of the neural network (110); wherein
the multi-objective loss function (402) comprises terms corresponding to maximizing mutual information between the probabilistic distributions of encodings of pairs of the clean data samples (x) and the adversarial data samples (x'), minimizing mutual information between encodings of one of the clean data samples (x) or the adversarial data samples (x') in the pair conditioned on another data sample in the pair, a clean cross-entropy loss determined for classifying the clean data samples (x), and an adversarial cross-entropy loss determined for classifying the adversarial data samples (x').

**Patentansprüche**

1. Computerimplementiertes Verfahren zum Trainieren eines neuronalen Netzes (110) zum Klassifizieren einer Vielzahl von Bilddatenproben (102), die von einer Kamera aufgenommen werden, wobei das Verfahren einen Prozessor (204) verwendet, der Befehle zum Implementieren des Verfahrens speichert, wobei die Befehle, wenn sie ausgeführt werden, den Prozessor (204) veranlassen, das Verfahren durchzuführen, umfassend:
Sammeln einer Vielzahl von Datenproben (102) als Eingabe zum Trainieren des neuronalen Netzes (110), wobei die Vielzahl von Datenproben (102) saubere Datenproben (x) und adversariale Datenproben (x') umfasst, wobei das Training des neuronalen Netzes (110) das Training eines probabilistischen Kodierers (106A, 106B) umfasst, um die Vielzahl von Datenproben (102) in eine probabilistische Verteilung über eine latente Raumdarstellung zu kodieren, wobei das Training des neuronalen Netzes das Trainieren eines Klassifizierers (104A, 104B) umfasst, um eine Instanz der latenten Raumdarstellung zu klassifizieren, um ein Klassifizierungsergebnis zu erstellen; wobei das Verfahren **gekennzeichnet ist durch** die Verfahrensschritte:

Trainieren geteilter Parameter einer ersten Instanz (112) des neuronalen Netzes (110) unter Verwendung der sauberen Datenproben (x) und einer zweiten Instanz (114) des neuronalen Netzes (110) unter Verwendung der adversarialen Datenproben (x'); und

Ausgeben der geteilten Parameter der ersten Instanz (112) des neuronalen Netzes (110) und der zweiten Instanz (114) des neuronalen Netzes (110); wobei das Verfahren ferner umfasst

Parametrisieren einer Mehrziel-Verlustfunktion (402) auf der Grundlage von gegenseitigen Informationen der Verteilungen über die latente Raumdarstellung, die durch den probabilistischen Kodierer (106A, 106B) der ersten Instanz (112) und der zweiten Instanz (114) des neuronalen Netzes (110) bestimmt werden, und der Entropieverluste des Klassifizierungsergebnisses, das durch die erste Instanz (112) und die zweite Instanz (114) des neuronalen Netzes (110) erstellt wird; wobei

die Mehrziel-Verlustfunktion (402) Terme umfasst, die der Maximierung von gegenseitigen Informationen zwischen den probabilistischen Verteilungen von Kodierungen von Paaren der sauberen Datenproben (x) und der adversarialen Datenproben (x'), der Minimierung der gegenseitigen Informationen zwischen Kodierungen von einer der sauberen Datenproben (x) oder der adversarialen Datenproben (x') in dem Paar, bedingt durch eine andere Datenprobe in dem Paar, einem sauberen Kreuzentropieverlust, der für die Klassifizierung der sauberen Datenproben (x) bestimmt wird, und einem adversarialen Kreuzentropieverlust, der für die Klassifizierung der adversarialen Datenproben (x') bestimmt wird, entsprechen.

2. Verfahren nach Anspruch 1, wobei die erste Instanz (112) des neuronalen Netzes (110) und die zweite Instanz (114) des neuronalen Netzes (110) gemeinsam trainiert werden, um eine Mehrziel-Verlustfunktion (402) einer Differenz zwischen entsprechenden Ausgaben der ersten Instanz (112) und der zweiten Instanz (114) zu minimieren, wobei die entsprechenden Ausgaben eine Differenz zwischen der probabilistischen Verteilung, die durch den probabilistischen Kodierer (106A, 106B) der ersten Instanz (112) und der zweiten Instanz (114) des neuronalen Netzes (110) bestimmt wird, und dem Klassifizierungsergebnis, das durch den Klassifizierer (104A, 104B) der ersten Instanz (112) und der zweiten Instanz (114) des neuronalen Netzes (110) bestimmt wird, umfassen.

3. Verfahren nach Anspruch 2, wobei das gemeinsame Training der ersten Instanz (112) des neuronalen Netzes (110) und der zweiten Instanz (114) des neuronalen Netzes (110) durchgeführt wird, wobei das gemeinsame Training mit den latenten Darstellungen für die sauberen Datenproben (x) und die adversarialen Proben (x'), die mehrfach abgetastet werden, durchgeführt wird.

4. Verfahren nach einem der vorhergehenden Ansprüche, wobei das Sammeln der Vielzahl von Datenproben (102) umfasst:

Empfangen der sauberen Datenproben (x) über einen Kommunikationskanal (502), wobei der Kommunikationskanal (502) einen oder eine Kombination aus einem verdrahteten Kanal und einem drahtlosen Kanal umfasst; und

Modifizieren jeder der sauberen Datenproben (x), um eine entsprechende adversariale Datenprobe (x') zu erzeugen, die die Paare der sauberen Datenproben (x) und der adversarialen Datenproben (x') bilden.

5. Verfahren nach Anspruch 4, wobei das Modifizieren umfasst:
Anwenden eines Adversarial-Beispiel-Erzeugungsverfahrens auf die sauberen Datenproben (x), wobei das Adversarial-Beispiel-Erzeugungsverfahren eines umfasst von einem projizierten Gradientenabstiegsverfahren, einem Fast-Gradient-Sign-Verfahren, einem Limited-Memory-Broyden-Fletcher-Goldfarb-Shanno-Verfahren, einem Jacobian-basierten Saliency-Map-Angriff oder einem Carlini & Wagner-Angriff.

6. System für künstliche Intelligenz, KI-System (202), zum Trainieren eines neuronalen Netzes (110) zum Klassifizieren einer Vielzahl von Bilddatenproben (102), die von einer Kamera aufgenommen werden, wobei das KI-System (202) umfasst:
einen Prozessor (204); und
einen Arbeitsspeicher (206), in dem Befehle gespeichert sind, wobei der Prozessor (204) eingerichtet ist, die gespeicherten Befehle auszuführen, um das KI-System (202) zu veranlassen zum:
Sammeln einer Vielzahl von Datenproben (102) als Eingabe zum Trainieren des neuronalen Netzes (110), wobei die Vielzahl von Datenproben saubere Datenproben (x) und adversariale Datenproben (x') umfasst, wobei das Training des neuronalen Netzes (110) das Training eines probabilistischen Kodierers (106A, 106B) umfasst, um die Vielzahl von Datenproben (102) in eine probabilistische Verteilung über eine latente Raumdarstellung zu kodieren, wobei das Training des neuronalen Netzes (110) das Trainieren eines Klassifizierers (104A, 104B) umfasst, um eine Instanz der latenten Raumdarstellung zu klassifizieren, um ein Klassifizierungsergebnis zu erstellen; **dadurch gekennzeichnet, dass** der Prozessor (204) eingerichtet ist, die gespeicherten Befehle auszuführen, um das KI-System (202) zu veranlassen zum:

Trainieren geteilter Parameter einer ersten Instanz (112) des neuronalen Netzes (110) unter Verwendung der sauberen Datenproben (x) und einer zweiten Instanz (114) des neuronalen Netzes (110) unter Verwendung der adversarialen Datenproben (x'); und

Ausgeben der geteilten Parameter der ersten Instanz (112) des neuronalen Netzes (110) und der zweiten Instanz (114) des neuronalen Netzes (110); wobei

das KI-System (202) eingerichtet ist zum Parametrisieren einer Mehrziel-Verlustfunktion (402) auf der Grundlage von gegenseitigen Informationen der Verteilungen über die latente Raumdarstellung, die durch den probabilistischen Kodierer (106A, 106B) der ersten Instanz (112) und der zweiten Instanz (114) des neuronalen Netzes (110) bestimmt werden, und der Entropieverluste des Klassifizierungsergebnisses, das durch die erste Instanz (112) und die zweite Instanz (114) des neuronalen Netzes (110) erstellt wird; wobei

die Mehrziel-Verlustfunktion (402) Terme umfasst, die der Maximierung von gegenseitigen Informationen zwischen den probabilistischen Verteilungen von Kodierungen von Paaren der sauberen Datenproben (x) und der adversarialen Datenproben (x'), der Minimierung der gegenseitigen Informationen zwischen Kodierungen von einer der sauberen Datenproben (x) oder der adversarialen Datenproben (x') in dem Paar, bedingt durch eine andere Datenprobe in dem Paar, einem sauberen Kreuzentropieverlust, der für die Klassifizierung der sauberen Datenproben (x) bestimmt wird, und einem adversarialen Kreuzentropieverlust, der für die Klassifizierung der adversarialen Datenproben (x') bestimmt wird, entsprechen.

7. KI-System (202) nach Anspruch 6, wobei die erste Instanz (112) des neuronalen Netzes (110) und die zweite Instanz (114) des neuronalen Netzes (110) gemeinsam trainiert werden, um eine Mehrziel-Verlustfunktion (402) einer Differenz zwischen entsprechenden Ausgaben der ersten Instanz (112) und der zweiten Instanz (114) zu minimieren, wobei die entsprechenden Ausgaben eine Differenz zwischen der probabilistischen Verteilung, die durch den probabilistischen Kodierer (106A, 106B) der ersten Instanz (112) und der zweiten Instanz (114) des neuronalen Netzes (110) bestimmt wird, und dem Klassifizierungsergebnis, das durch den Klassifizierer (104A, 104B) der ersten Instanz (112) und der zweiten Instanz (114) des neuronalen Netzes (110) bestimmt wird, umfassen.

8. KI-System (202) nach Anspruch 7, wobei das gemeinsame Training der ersten Instanz (112) des neuronalen Netzes (110) und der zweiten Instanz (114) des neuronalen Netzes (110) durchgeführt wird, wobei das gemeinsame Training mit den latenten Darstellungen für die sauberen Datenproben (x) und die adversarialen Proben (x'), die mehrfach abgetastet werden, durchgeführt wird.

9. KI-System (202) nach einem der Ansprüche 6 bis 8, wobei das KI-System (202) eingerichtet ist, die Vielzahl von Datenproben (102) zu sammeln, indem ein erster Schritt und ein zweiter Schritt durchgeführt wird, wobei das KI-System (202) den ersten Schritt des Empfangens der sauberen Datenproben (x) über einen Kommunikationskanal (502) durchführt, wobei das KI-System (202) den zweiten Schritt des Modifizierens jeder der sauberen Datenproben (x) unter Verwendung eines Modifikationsmoduls (504) durchführt, um eine entsprechende adversariale Datenprobe (x') zu erzeugen, die die Paare der sauberen Datenproben (x) und der adversarialen Datenproben (x') bilden.

10. KI-System (202) nach Anspruch 9, wobei das Modifikationsmodul (504) eingerichtet ist zum Anwenden eines Adversarial-Beispiel-Erzeugungsverfahrens auf die sauberen Datenproben (x), wobei das Adversarial-Beispiel-Erzeugungsverfahren eines umfasst von einem projizierten Gradientenabstiegsverfahren, einem Fast-Gradient-Sign-Verfahren, einem Limited-Memory-Broyden-Fletcher-Goldfarb-Shanno-Verfahren, einem Jacobian-basierten Saliency-Map-Angriff oder Carlini & Wagner-Angriff.

11. Nicht-transitorisches computerlesbares Medium, auf dem computerausführbare Befehle zum Trainieren eines neuronalen Netzes (110) zum Klassifizieren einer Vielzahl von durch eine Kamera aufgenommenen Bilddatenproben (102) gespeichert sind, die, wenn sie von einem Computer (600) ausgeführt werden, den Computer (600) veranlassen, Betriebe auszuführen, wobei die Betriebe umfassen:
Sammeln einer Vielzahl von Datenproben (102) als Eingabe zum Trainieren des neuronalen Netzes (110), wobei die Vielzahl von Datenproben (102) saubere Datenproben (x) und adversariale Datenproben (x') umfasst, wobei das Training des neuronalen Netzes (110) das Training eines probabilistischen Kodierers (106A, 106B) umfasst, um die Vielzahl von Datenproben (102) in eine probabilistische Verteilung über eine latente Raumdarstellung zu kodieren, wobei das Training des neuronalen Netzes (110) das Trainieren eines Klassifizierers (104A, 104B) umfasst, um eine Instanz der latenten Raumdarstellung zu klassifizieren, um ein Klassifizierungsergebnis zu erstellen; **dadurch gekennzeichnet, dass** die Betriebe umfassen:

Trainieren geteilter Parameter einer ersten Instanz (112) des neuronalen Netzes (110) unter Verwendung der sauberen Datenproben (x) und einer zweiten Instanz (114) des neuronalen Netzes (110) unter Verwendung der adversarialen Datenproben (x'); und

Ausgeben der geteilten Parameter der ersten Instanz (112) des neuronalen Netzes (110) und der zweiten Instanz (114) des neuronalen Netzes (110); wobei die Betriebe ferner umfassen

Parametrisieren einer Mehrziel-Verlustfunktion (402) auf der Grundlage von gegenseitigen Informationen der Verteilungen über die latente Raumdarstellung, die durch den probabilistischen Kodierer (106A, 106B) der ersten Instanz (112) und der zweiten Instanz (114) des neuronalen Netzes (110) bestimmt werden, und der Entropieverluste des Klassifizierungsergebnisses, das durch die erste Instanz (112) und die zweite Instanz (114) des neuronalen Netzes (110) erstellt wird; wobei

die Mehrziel-Verlustfunktion (402) Terme umfasst, die der Maximierung von gegenseitigen Informationen zwischen den probabilistischen Verteilungen von Kodierungen von Paaren der sauberen Datenproben (x) und der adversarialen Datenproben (x'), der Minimierung der gegenseitigen Informationen zwischen Kodierungen von einer der sauberen Datenproben (x) oder der adversarialen Datenproben (x') in dem Paar, bedingt durch eine andere Datenprobe in dem Paar, einem sauberen Kreuzentropieverlust, der für die Klassifizierung der sauberen Datenproben (x) bestimmt wird, und einem adversarialen Kreuzentropieverlust, der für die Klassifizierung der adversarialen Datenproben (x') bestimmt wird, entsprechen.

## Revendications

1. Procédé mis en œuvre par ordinateur pour entraîner un réseau neuronal (110) à classer une pluralité d'échantillons de données d'images (102) capturées par une caméra, dans lequel le procédé utilise un processeur (204) qui stocke des instructions pour mettre en œuvre le procédé, dans lequel les instructions, lorsqu'elles sont exécutées, amènent le processeur (204) à exécuter le procédé, comprenant :
le recueil d'une pluralité d'échantillons de données (102) comme entrée pour l'entraînement du réseau neuronal (110), dans lequel la pluralité d'échantillons de données (102) comprend des échantillons de données propres (x) et des échantillons de données contradictoires (x'), dans lequel l'entraînement du réseau neuronal (110) comprend l'entraînement d'un codeur probabiliste (106A, 106B) pour coder la pluralité d'échantillons de données (102) en une distribution probabiliste sur une représentation d'espace latent, dans lequel l'entraînement du réseau neuronal comprend l'entraînement d'un classificateur (104A, 104B) pour classifier une instance de la représentation d'espace latent afin de produire un résultat de classification ; le procédé étant **caractérisé par** les étapes de procédé de :

un entraînement de paramètres partagés d'une première instance (112) du réseau neuronal (110) à l'aide des échantillons de données propres (x) et d'une seconde instance (114) du réseau neuronal (110) à l'aide des échantillons de données contradictoires (x') ; et
une mise en sortie des paramètres partagés de la première instance (112) du réseau neuronal (110) et de la seconde instance (114) du réseau neuronal (110) ; le procédé comprenant en outre
le paramétrage d'une fonction de perte multi-objectif (402) fondée sur des informations mutuelles des distributions sur la représentation d'espace latent déterminée par le codeur probabiliste (106A, 106B) de la première instance (112) et de la seconde instance (114) du réseau neuronal (110) et sur les pertes d'entropie du résultat de classification produit par la première instance (112) et la seconde instance (114) du réseau neuronal (110) ; dans lequel
la fonction de perte multi-objectif (402) comprend des termes correspondant à la maximisation des informations mutuelles entre les distributions probabilistes des codages des paires des échantillons de données propres (x) et des échantillons de données contradictoires (x'), à la minimisation des informations mutuelles entre les codages des échantillons de données propres (x) ou des échantillons de données contradictoires (x') dans la paire en fonction d'un autre échantillon de données dans la paire, une perte d'entropie croisée propre déterminée pour classer les échantillons de données propres (x), et une perte d'entropie croisée contradictoire déterminée pour classer les échantillons de données contradictoires (x').

2. Procédé selon la revendication 1, dans lequel la première instance (112) du réseau neuronal (110) et la seconde instance (114) du réseau neuronal (110) sont entraînées conjointement pour minimiser une fonction de perte multi-objectif (402) d'une différence entre les sorties correspondantes de la première instance (112) et de la seconde instance (114), dans lequel les sorties correspondantes comprennent une différence entre la distribution probabiliste déterminée par le codeur probabiliste (106A, 106B) de la première instance (112) et de la seconde instance (114) du réseau neuronal (110) et le résultat de la classification est déterminé par le classificateur (104A, 104B) de la première instance (112) et de la seconde instance (114) du réseau neuronal (110).

3. Procédé selon la revendication 2, dans lequel l'entraînement conjoint de la première instance (112) du réseau neuronal (110) et de la seconde instance (114) du réseau neuronal (110) est effectué, dans lequel l'entraînement conjoint est effectué avec les représentations latentes pour les échantillons de données propres (x) et les échantillons contradictoires (x') qui sont échantillonnés plusieurs fois.

4. Procédé selon l'une quelconque des revendications précédentes, dans lequel la collecte de la pluralité d'échantillons de données (102) comprend :

la réception des échantillons de données propres (x) sur un canal de communication (502), dans lequel le canal de communication (502) comprend un canal câblé ou un canal sans fil ou une combinaison des deux ; et
la modification de chacun des échantillons de données propres (x) pour générer un échantillon de données contradictoires (x') correspondant formant les paires des échantillons de données propres (x) et des échantillons de données contradictoires (x').

5. Procédé selon la revendication 4, dans lequel la modification comprend :
l'application d'un procédé de génération d'exemples contradictoires sur les échantillons de données propres (x), dans lequel le procédé de génération d'exemples contradictoires comprend l'un du procédé de descente de gradient projeté, du procédé de signe de gradient rapide, du procédé Broyden-Fletcher-Goldfarb-Shanno à mémoire limitée, de l'attaque par carte de saillance basée sur les jacobiens ou de l'attaque Carlini & Wagner.

6. Système d'intelligence artificielle, système d'IA (202), pour l'entraînement d'un réseau neuronal (110) pour la classification d'une pluralité d'échantillons de données d'images (102) capturées par une caméra, le système d'IA (202) comprenant :
un processeur (204) ; et
une mémoire (206) contenant des instructions stockées sur celle-ci, dans lequel le processeur (204) est configuré pour exécuter les instructions stockées afin d'amener le système d'IA (202) à :
recueillir une pluralité d'échantillons de données (102) comme entrée pour l'entraînement du réseau neuronal (110), dans lequel la pluralité d'échantillons de données comprend des échantillons de données propres (x) et des échantillons de données contradictoires (x'), dans lequel l'entraînement du réseau neuronal (110) comprend l'entraînement d'un codeur probabiliste (106A, 106B) pour coder la pluralité d'échantillons de données (102) en une distribution probabiliste sur une représentation d'espace latent, dans lequel l'entraînement du réseau neuronal (110) comprend l'entraînement d'un classificateur (104A, 104B) pour classifier une instance de la représentation d'espace latent afin de produire un résultat de classification ; **caractérisé en ce que** le processeur (204) est configuré pour exécuter les instructions stockées pour amener le système d'IA (202) à :

entraîner des paramètres partagés d'une première instance (112) du réseau neuronal (110) à l'aide des échantillons de données propres (x) et d'une seconde instance (114) du réseau neuronal (110) à l'aide des échantillons de données contradictoires (x') ; et
délivrer en sortie les paramètres partagés de la première instance (112) du réseau neuronal (110) et de la seconde instance (114) du réseau neuronal (110) ; dans lequel
le système d'IA (202) est configuré pour paramétrer une fonction de perte multi-objectif (402) fondée sur des informations mutuelles des distributions sur la représentation d'espace latent déterminée par le codeur probabiliste (106A, 106B) de la première instance (112) et de la seconde instance (114) du réseau neuronal (110) et sur les pertes d'entropie du résultat de classification produit par la première instance (112) et la seconde instance (114) du réseau neuronal (110) ; dans lequel
la fonction de perte multi-objectif (402) comprend des termes correspondant à la maximisation des informations mutuelles entre les distributions probabilistes des codages des paires des échantillons de données propres (x) et des échantillons de données contradictoires (x'), à la minimisation des informations mutuelles entre les codages des échantillons de données propres (x) ou des échantillons de données contradictoires (x') dans la paire en fonction d'un autre échantillon de données dans la paire, une perte d'entropie croisée propre déterminée pour classer les échantillons de données propres (x), et une perte d'entropie croisée contradictoire déterminée pour classer les échantillons de données contradictoires (x').

**7.** Système d'IA (202) selon la revendication 6, dans lequel la première instance (112) du réseau neuronal (110) et la seconde instance (114) du réseau neuronal (110) sont entraînées conjointement pour minimiser une fonction de perte multi-objectif (402) d'une différence entre les sorties correspondantes de la première instance (112) et de la seconde instance (114), dans lequel les sorties correspondantes comprennent une différence entre la distribution probabiliste déterminée par le codeur probabiliste (106A, 106B) de la première instance (112) et de la seconde instance (114) du réseau neuronal (110) et le résultat de la classification est déterminé par le classificateur (104A, 104B) de la première instance (112) et de la seconde instance (114) du réseau neuronal (110).

**8.** Système d'IA (202) selon la revendication 7, dans lequel l'entraînement conjoint de la première instance (112) du réseau neuronal (110) et de la seconde instance (114) du réseau neuronal (110) est effectué, dans lequel l'entraînement conjoint est effectué avec les représentations latentes pour les échantillons de données propres (x) et les échantillons contradictoires (x') qui sont échantillonnés plusieurs fois.

**9.** Système d'IA (202) selon l'une quelconque des revendications 6 à 8, dans lequel le système d'IA (202) est configuré pour collecter la pluralité d'échantillons de données (102) en effectuant une première étape et une seconde étape, dans lequel le système d'IA (202) effectue la première étape de réception des échantillons de données propres (x) sur un canal de communication (502), dans lequel le système d'IA (202) effectue la seconde étape de modification de chacun des échantillons de données propres (x) en utilisant un module de modification (504) pour générer un échantillon de données contradictoires (x') correspondant formant les paires des échantillons de données propres (x) et des échantillons de données contradictoires (x').

**10.** Système d'IA (202) selon la revendication 9, dans lequel le module de modification (504) est configuré pour appliquer un procédé de génération d'exemples contradictoires sur les échantillons de données propres (x), dans lequel le procédé de génération d'exemples contradictoires comprend l'un des procédés suivantes : de descente de gradient projeté, du procédé de signe de gradient rapide, du procédé Broyden-Fletcher-Goldfarb-Shanno à mémoire limitée, de l'attaque par carte de saillance basée sur les jacobiens ou de l'attaque Carlini & Wagner.

**11.** Support non transitoire lisible par ordinateur sur lequel sont stockées des instructions exécutables par ordinateur, pour l'entraînement d'un réseau neuronal (110) en vue de la classification d'une pluralité d'échantillons de données d'images (102) capturées par une caméra, qui, lorsqu'elles sont exécutées par un ordinateur (600), amènent l'ordinateur (600) à exécuter des opérations, les opérations comprenant :
le recueil d'une pluralité d'échantillons de données (102) comme entrée pour l'entraînement du réseau neuronal (110), dans lequel la pluralité d'échantillons de données (102) comprend des échantillons de données propres (x) et des échantillons de données contradictoires (x'), dans lequel l'entraînement du réseau neuronal (110) comprend l'entraînement d'un codeur probabiliste (106A, 106B) pour coder la pluralité d'échantillons de données (102) en une distribution probabiliste sur une représentation d'espace latent, dans lequel l'entraînement du réseau neuronal (110) comprend l'entraînement d'un classificateur (104A, 104B) pour classifier une instance de la représentation d'espace latent afin de produire un résultat de classification ; **caractérisé par** les opérations comprenant :

un entraînement de paramètres partagés d'une première instance (112) du réseau neuronal (110) à l'aide des échantillons de données propres (x) et d'une seconde instance (114) du réseau neuronal (110) à l'aide des échantillons de données contradictoires (x') ; et
une mise en sortie des paramètres partagés de la première instance (112) du réseau neuronal (110) et de la seconde instance (114) du réseau neuronal (110) ; les opérations comprenant en outre
le paramétrage d'une fonction de perte multi-objectif (402) fondée sur des informations mutuelles des distributions sur la représentation d'espace latent déterminée par le codeur probabiliste (106A, 106B) de la première instance (112) et de la seconde instance (114) du réseau neuronal (110) et sur les pertes d'entropie du résultat de classification produit par la première instance (112) et la seconde instance (114) du réseau neuronal (110) ; dans lequel
la fonction de perte multi-objectif (402) comprend des termes correspondant à la maximisation des informations mutuelles entre les distributions probabilistes des codages des paires des échantillons de données propres (x) et des échantillons de données contradictoires (x'), à la minimisation des informations mutuelles entre les codages des échantillons de données propres (x) ou des échantillons de données contradictoires (x') dans la paire en fonction d'un autre échantillon de données dans la paire, une perte d'entropie croisée propre déterminée pour classer les échantillons de données propres (x), et une perte d'entropie croisée contradictoire déterminée pour classer les échantillons de données contradictoires (x').

FIG.1

100

NEURAL NETWORK 110

First instance 112

PLURALITY OF
DATA SAMPLES 102

CLEAN DATA
SAMPLES x

CLASSIFIER 104A

$p_\theta(\mathbf{z}|\mathbf{x})$
PROBALISTIC
ENCODER
106A

z

Remaining
layers 108A

Latent space Representation

Clean
Cross-Entropy
$CE(\hat{y}, y)$

Second instance 114

ADVERSIAL
DATA SAMPLES
x'

CLASSIFIER 104B

$p_\theta(\mathbf{z}'|\mathbf{x}')$
PROBALISTIC
ENCODER
106B

z'

Remaining
layers 108B

Latent space Representation

OUTPUT
116

Adversarial
Cross-Entropy
$CE(\hat{y}', y)$

EP 4 288 912 B1

# FIG.2A

200A

102

PLURALITY
OF DATA
SAMPLES

AI SYSTEM 202

PROCESSOR
204

MEMORY 206

NEURAL NETWORK
110

116

SHARED
INFORMATION

EP 4 288 912 B1

200B

X          X'

Z

(a)

X          X'

Z

(b)

X          X'

Z

(c)

X          X'

Z

(d)

EP 4 288 912 B1

FIG.3

300

302 — DATA SAMPLES COLLECTION

304 — TRAINING NEURAL NETWORK

306 — TRAINING SHARED PARAMETERS

308 — OUTPUT SHARED PARAMETERS

FIG.4

400

MULTI-OBJECTIVE LOSS FUNCTION
402

$z$    $z'$

$I(z; z')$

EP 4 288 912 B1

# FIG.5

CLEAN DATA SAMPLES x

x

500

COMMUNICATION CHANNEL

502

MODIFICTION MODULE

504

ADVERSARIAL DATA SAMPLES x'

x'

## FIG.6

600

**DATA SIGNALS 622**

**SENSOR 602**

**PROCESSOR 604**

614

**MEMORY 606**

**NEURAL NETWORK 608**

**NIC 618**

**NETWORK 620**

**RECIEVER 610**

**STORAGE 612**

**TRANSMITTER 616**

**INPUT DEVICE 624**

**OUTPUT DEVICE 626**

EP 4 288 912 B1

FIG.7

700

702B

702A

704

EP 4 288 912 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WEIZHU QIAN et al.** *Learning Robust Variational Information Bottleneck with Reference*, 29 April 2021

- **SHUO WANG et al.** *Defending Adversarial Attacks via Semantic Feature Manipulation*, 04 February 2020
- **MINSEON KIM et al.** *Adversarial Self-Supervised Contrastive Learning*, 26 October 2020